# EUROPEAN PATENT SPECIFICATION

(11) **EP 3 207 087 B1**
(45) Date of publication and mention of the grant of the patent: **11.08.2021**
(21) Application number: 15777948.9
(22) Date of filing: 09.10.2015
(51) Int. Cl.: C08K 5/103, C08L 67/02

(54) **USE OF AN ADDITIVE**
VERWENDUNG EINES ADDITIVS
UTILISATION D'UN ADDITIF

(30) Priority: 17.10.2014 GB 201418452
(43) Date of publication of application: 23.08.2017
(73) Proprietor: DuPont Nutrition Biosciences ApS, 1411 Copenhagen K (DK)
(72) Inventor: HENTZE, Hans-Peter, DK-8381 Tilst (DK); NIELSEN, Bjarne, DK-8600 Silkeborg (DK)
(74) Representative: DuPont EMEA
(86) International application number: PCT/EP2015/073383
(87) International publication number: WO 2016/058927

(56) References cited:
- EP-A1- 2 653 498
- WO-A1-2012/147871
- JP-A- 2006 117 737
- US-A1- 2010 076 127
- DATABASE WPI Week 201061 Thomson Scientific, London, GB; AN 2010-K86057 XP002752087, & JP 2010 189584 A (TORAY IND INC) 2 September 2010 (2010-09-02)
- None

## Description

### FIELD OF THE INVENTION

The present invention relates to the use of an internal additive in a polyester polymer composition to reduce torque during processing of the polymer. The invention further relates to the use of the polymer composition for packaging materials.

### BACKGROUND OF THE INVENTION

Polyolefins, such as polyethylene and polypropylene, are the largest group of technical polymers, accounting for an annual global production of about 150 million ton per year (t/a). The third largest technical polymer group after polyolefins and poly(vinyl chloride) are polyesters, with an annual production of more than 50 million t/a. Especially poly(ethylene terephthalate) (PET) is a rapidly growing polyester type with increasing significance also for the food packaging market. The main advantages of the use of PET in food packaging, compared to other polymers like polyolefins, are mechanical performance, optical clarity, barrier properties and improved shelf-life.

About 50 million tons of polyesters are produced per year. Therefore polyesters account for approximately 22% of the global polymer production. In addition most bioplastics, bio-based and biodegradable polymers are polyesters, like poly(trimethylene terephthalate) (e.g. Sorona®) and polybutyrate (e.g. Ecoflex®). However, the by far largest and most rapidly growing polyester type is PET, with a global production volume of 40 million t/a and a growth rate of about 6%.

The desired properties of PET for packaging applications are attained from its intrinsic polymer properties. PET has become the packaging material of choice for many food products, owing to its glass-like transparency, a high hardness/weight ratio, recyclability, aroma and gas barrier properties, improving the shelf-life of the food. Therefore PET is rapidly developing also as an alternative to other food packaging materials like polyethylene (PE) and polypropylene (PP), as per article published in the ILSI Report Series 'Packaging materials 1. Polyethylene terephthalate (PET) for food packaging applications', International Life Science Institute, 1-16 (2000)

Like for any other engineered polymer, the production and processing of PET requires a variety of additives. Among others these include antistatic and antifogging additives, as well as UV absorbers, acetalaldehyde scavengers, nucleation additives, chain extenders, impact modifiers, dispersants, reinforcement fillers, plasticizers and lubricants.

For polyesters used for sensitive applications, like food, beverage, cosmetic and medical packaging, there is a growing demand of food grade additives due to their product safety profile. In addition to a safe product profile, for bio-based polyesters food-grade additives match also the requirements regarding sustainability, renewability and optionally also biodegradability.

In contrast to other polymers, like polyolefins or PVC, the processing temperatures for polyesters, like PET, can be much higher (e.g. 280-320°C). Therefore the polymer additives for these polymers demand high thermal stability. Polyesters like PET also have a high coefficient of friction and therefore require internal lubricants, for reduction of torque during extrusion, for mold release, as well as for surface lubrication for handling and for improved scratch resistance.

A commonly used internal lubricant for polyesters like PET is pentaerythritol tetrastearate (PETS), which is not food-grade. Erucamide is used as a food-grade additive but shows low thermal stability and thus is not optimal for use together with polyesters.

Polyesters are sensitive to hydrolysis during polymer extrusion in contrast to polyolefins. Therefore the residual water content of e.g. PET before extrusion is typically below 0.025 wt%. However, polyesters can not only react with water during extrusion, but also with hydroxyl groups, leading to polymer degradation by alcoholysis. Typical food-grade polymer additives based on glycerol, like glycerol monostearate (GMS), contain significant amounts of free hydroxyl groups that can react and degrade polyesters under processing conditions. In addition, the comparably high extrusion temperatures (*e.g.* 300°C for PET) can lead to degradation of the additive itself. Additives for PET should also have a low volatility, as in some processes the drying of the PET occurs under vacuum at extrusion temperatures.

GB2411656 describes slip additives for polyester polymers such as PET. These slip additives are highly effective in lowering the coefficient of friction of the polymer compound during extrusion without adding color to the PET but maintaining high clarity of the product. The slip agents to be used can be compounds such as compounds with the formula R-C(O)O-R', where R and R' represent C₁₋₃₄ hydrocarbons.

JP2010189584 describes a polymer composition for packaging applications, said composition comprising polybutylene terephthalate and as a mold release agent 0.05-5.0 parts by weight of a polyglycerol fatty acid ester with a degree of esterification of 100%.

However, alternative internal additives are needed which are food-grade, high temperature stable and able to act as internal lubricants in order to reduce torque extrusion, which can be used for sensitive applications, like food, beverages, cosmetics and medical packaging

### OBJECT OF THE INVENTION

It is the object of the present invention to provide the use of an internal additive which is food-grade with high thermal stability and able to act as a lubricant in polymers such as polyester polymer compositions and hereby reduce the torque during extrusion.

It is a further object of the present invention to provide a packaging material made from a polyester polymer, which can be used for packaging of sensitive components such as food, beverages, cosmetic and medical products.

### BRIEF DESCRIPTION OF THE DRAWINGS

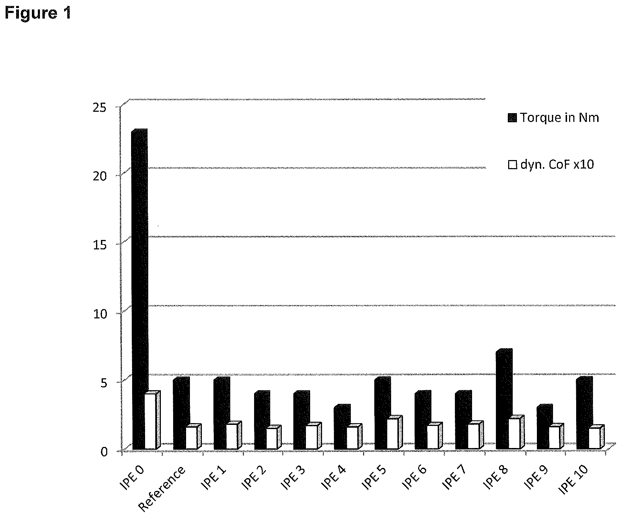

Figure 1 illustrates reduction of torque by polyglycerol fatty acid esters during extrusion and surface friction of polymer films.

### DETAILED DESCRIPTION

The object of the invention is solved by a use according to claim 1.

In one embodiment, the polymer composition comprises PET. This includes all polymeric and copolymeric forms of poly(ethyleneterephthalate). PET is further to include all polymers derived from aromatic diacids including all terephthalate polymers and their derivatives.

This invention describes highly esterified polyglycerol fatty acid esters as food-grade additives having low reactivity with polyesters under processing conditions and with high thermal stability. The low reactivity is based on a high degree of esterification, resulting in a reduced number of free hydroxyl groups and low hydroxyl values. Typically, polyglycerol fatty acid esters have better thermal stabilities and lower volatility than food-grade additives with lower molecular weight, like many glycerol esters and alkanediol esters.

In one embodiment, the polyglycerol fatty acid esters can be formed by esterification of the polyglycerol units by carboxylic acids like fatty acids.

As is understood by one skilled in the art a polyglycerol fatty acid ester comprises a polyglycerol 'backbone' onto which fatty acid side chains are attached.

Polyglycerol fatty acids esters are typically prepared by polymerisation of glycerol to provide one or more polyglycerols to which the fatty acids are then attached. The fatty acids are generally attached by one of two routes. A first route involves the direct attachment of the fatty acid to the polyglycerol. The second route involves inter-esterifying a polyglycerol and a triglyceride thereby transferring fatty acids from the triglyceride to the polyglycerol.

Examples of polyglycerol fatty acid esters are for example but not limited to fully acetylated diglycerol stearate, fully acetylated triglycerol stearate, fully acetylated hexaglycerol stearate, triglycerol stearate, triglycerol behenate, 50%-acetylated diglycerol oleate, 75%-acetylated diglycerol oleate, 100%-acetylated diglycerol oleate, triglycerol laurate, hexaglycerol heptastearate.

The polyglycerol fatty acid esters have a degree of esterification of at least 70%. The degree of esterification needs to be above 50% in order for the polyglycerol fatty acid ester to be able to function properly as an internal additive. When the internal additives are highly esterified the remaining hydroxyl groups are sterically hindered and do not significantly react with the polyester itself under processing conditions.

In a further embodiment, the degree of esterification is at least 80%. In a further embodiment, the composition comprises fully esterified polyglycerol fatty acid esters.

In this invention the internal additives are highly esterified. The remaining hydroxyl groups are therefore sterically hindered and do not significantly reduce the molecular weight of the polyester during processing. However, as lubricants they can reduce the extrusion torque, and/or the extrusion pressure. In this way they enable energy savings during processing and better processability by reducing also surface friction, e.g. for mold release, processing or handling of final products.

In the polymer composition the concentration of the internal additive is 0.1-5 wt%. Hereby, is to be understood that the weight of the internal additive comprises 5% or less of the total weight of the polymer composition. If the concentration of the internal additive is too high this could alter the mechanical properties of the polymer matrix. In a further embodiment, the concentration of said internal additive is 0.3-3 wt%. In a still further embodiment, the concentration of said internal additive is 0.5-3 wt%.

In a further embodiment, the fatty acid chain length is C2-C24. In a still further embodiment, the fatty acid chain length is C12-C22. In a still further embodiment, the fatty acid chain length is C14-C24. In a still further embodiment, the fatty acid chain length is C16-C24. In a still further embodiment, the fatty acid chain length is C10-C16.

These chain lengths are particularly advantageous in combination with food or foodstuff since they are all edible fatty acids.

It is implicitly to be understood that both saturated and unsaturated fatty acids can be used as part of the polyglycerol fatty acid ester.

Furthermore, a mixture of saturated and unsaturated fatty acids can be used in the formation of the polyglycerol fatty acid esters.

Furthermore, a mixture of different chain lengths of fatty acids can be used for the internal additive. Hereby is to be understood that the internal additive added to a polymer composition can comprise fatty acids with different chain lengths.

The fatty acids can be both saturated and unsaturated fatty acids such as but not limited to propionic acid, butyric acid, valeric acid, caproic acid, enathic acid, caprylic acid, pelargonic acid, capric acid, undecylic acid, luric acid, tridecylic acid myristic acid, pentadecylic acid, palmitic acid, margaric acid, staric acid, nonadecylic acid, arachidic acid, heneicosylic acid, behenic acid, tricosylic acid, lignoceric acid, α-linolenic acid, stearidonic acid, eicosapentaenoic acid, docosahexaenoic acid, linoleic acid, γ-linolenic acid, dihomo-γ-linolenic acid, arachidonic acid, docosatetraenoic acid, palmitoleic acid, vaccenic acid, paullinic acid, oleic acid, elaidic acid, gondoic acid, erucic acid, nervonic acid, mead acid, ricinoleic acid, dihydroxystearic acid.

In a further embodiment, the composition is in a form of a solid, a paste or a liquid.

In a further embodiment, the hydroxyl value is below 750. In a further embodiment, the hydroxyl value is below 500. In a further embodiment, the hydroxyl value is below 400. In a further embodiment, the hydroxyl value is below 350. In a further embodiment, the hydroxyl value is below 200. In a further embodiment, the hydroxyl value is below 100.

In addition, polyesters need internal additives with low reactivity, e.g. a low number of hydroxyl groups in order to avoid transesterification reactions or hydrolysis during processing.

A low hydroxyl value relates to a low number of accessible hydroxyl groups. Thus, a relatively low value is beneficial in preventing the internal additive from binding to the polyester during processing.

The hydroxyl value is related to the number of hydroxyl-groups in the polyglycerol fatty acid esters and can be measured by the JECFA method, based on AOCS Method Cd 13-60.

The number of glycerol units is 2-5. In a still further embodiment, the number of glycerol units is 2-3. In a still further embodiment, the number of glycerol units is 4-5.

In a further embodiment, the number of glycerol units in said polyglycerol is at least two. Hereby, it is to be understood that the number of glycerol units condensed to form the polyglycerol is at least two. Thus, two glycerol units can be condensed to form the polyglycerol, three glycerol units can be condensed to form the polyglycerol, four glycerol units can be condensed to form the polyglycerol and five glycerol units can be condensed to form the polyglycerol.

In one embodiment, the polyglycerol is a diglycerol. In a further embodiment, the polyglycerol is a triglycerol. In a still further embodiment, the polyglycerol is a tetraglycerol. In a still further embodiment, the polyglycerol is a pentaglycerol.

In one embodiment, the polyglycerol is a mixture of two or more different polyglycerols. Hence, the internal additive may comprise for example a mixture of diglycerols and triglycerols; diglycerols and tetraglycerols; diglycerols, triglycerols and tetraglycerols; diglycerols and pentaglycerols and so forth.

Furthermore, it is to be understood that polyglycerol is to be interpreted as a polyglycerol having x glycerol units but also comprising smaller amounts of e.g. (x-1), (x-2), (x+1) and (x+2) glycerol units. X is to be understood as the number of glycerol units condensed.

Polyglycerols may be linear, branched or cyclic in structure. Generally, all three types of polyglycerol structure may be present in the composition of the present invention. In one embodiment, the polyglycerol is linear. In one embodiment, the polyglycerol is branched. In one embodiment, the polyglycerol is cyclic.

The processes for making polyglycerols are well known to the person skilled in the art and can be found, for example in "Emulsifiers in Food Technology", Blackwell Publishing, edited by RJ Whithurst, page 110 to 130.

In a further embodiment, the internal additive has high thermal stability with less than 25% weight loss at 300°C as determined by thermogravimetric analysis (TGA).

It is important for the invention that the internal additive to be mixed with the polymer i.e. PET is thermally stable since the internal additive is to be heated during the extrusion process of the polymer compound.

In a further embodiment, the water content of said internal additive is below 1 wt%.

In order for the internal additive to function most efficiently it is important that the polyglycerol fatty acid esters do not comprise too much water since this will impair the extrusion process as it induces hydrolysis of the polyester.

In a further embodiment, the residual glycerol and polyglycerol content of said internal additive is below 7 wt%, preferably below 5 wt%.

By residual glycerol and polyglycerol content are to be understood non-reacted pure glycerol or polyglycerol, which is a contamination of the polyglycerol fatty acid ester. This non-reacted pure glycerol or polyglycerol will react with the polymer such as the PET and hereby counteract the effect of the esterification. Thus, this value is to be as low as possible. A level below 7 wt% is approved for food applications but preferably this value is even lower.

In a further embodiment, the fatty acids are a combination of acetate (C2) and saturated and/or unsaturated fatty acids with C10-C22 where the molar ratio of said fatty acids are N(C2)>N(Cx), where x is any carbon number larger than 2.

The acetyl groups cap free hydroxyl groups. The acetyl group is relatively small and thus reacts more easily with residual hydroxyl groups. Furthermore, the acetyl groups enable the formation of liquid polyglycerol fatty acid esters.

This invention further describes a method of making a polyester compound by mixing poly(ethylene terephthalate) (PET) and an internal additive to form a composition as described herein and hereafter extruding said composition into a polyester compound.

The internal additives can be mixed with the PET in a number of ways known by the persons skilled in the art. The internal additives can be applied directly by coextrusion, during compounding or via masterbatches.

Furthermore, a method is described where the PET and said internal additive are mixed during the extrusion process.

In one embodiment, liquid additives could be dosed directly into the extruder. This might result in a better process control.

This invention further describes a use of an internal additive in a polymer composition, where said internal additive is a polyglycerol fatty acid ester having a degree of esterification of at least 70% and 2-5 glycerol repeating units as a lubricant and/or an anti-blocker during processing of the polymer.

The polymer is a polyester. In a further use, the polymer composition is a polyester such as poly(trimethylene terephthalate) (*e.g.* Sorona®) and polybutyrate (*e.g.* Ecoflex®).

In a still further use, the polymer is poly(ethylene terephthalate) (PET). In a still further use, the polymer composition comprises PET. This includes all polymeric and copolymeric forms of poly(ethylene terephthalate). PET is further to include all polymers derived from aromatic diacids including all terephthalate polymers and their derivatives.

By lubricant is meant a compound, which reduces forces between moving surfaces, indicated e.g. by torque reduction during extrusion and/or a reduced coefficient of friction of the polymer surface after production.

The term anti-blocker or antiblocking agent is to be understood as a compound reducing the adhesion or bonding of two surfaces of polymer film, which occur after production and/or during storage.

In a further use the torque during processing is reduced. Hereby is to be understood that polymers such as particularly polyesters cause high mechanical resistance during extrusion causing high torque values of the extrusion screw. Hereby extrusion pressures and energy use rise. Thus efficient lubrication during extrusion improves both processability and energy consumption.

In a still further use the surface friction during processing is reduced. Hereby is to be understood that polymers such as particularly polyesters show a high coefficient of friction, which can lead to blocking, nesting and scratching when the polyester slides against surfaces. Polyglycerol fatty acid esters used as internal lubricants reduce the coefficient of friction of the polyester surface and therefore contribute to surface lubrication of polyesters.

This invention describes the use of highly esterified polyglycerol fatty acid esters as food-grade additives having low reactivity with polymers such as polyesters under processing conditions and with high thermal stability. The low reactivity is based on a high degree of esterification, leading to a reduced number of free hydroxyl groups and low hydroxyl values.

Typically, polyglycerol fatty acid esters have better thermal stabilities and lower volatility than food-grade additives with lower molecular weight, like many glycerol esters and alkanediol esters.

In one use, the polyglycerol fatty acid ester can be formed by esterification of the polyglycerol units by carboxylic acids like fatty acids.

As is understood by one skilled in the art a polyglycerol fatty acid ester comprises a polyglycerol 'backbone' onto which fatty acid side chains are attached.

Polyglycerol fatty acid esters are typically prepared by polymerisation of glycerol to provide one or more polyglycerols to which the fatty acids are then attached. The fatty acids are generally attached by one of two routes. A first route involves the direct attachment of the fatty acid to the polyglycerol. The second route involves inter-esterifying a polyglycerol and a triglyceride thereby transferring fatty acids from the triglyceride to the polyglycerol.

Examples of polyglycerol fatty acid ester are for example but not limited to fully acetylated diglycerol stearate, fully acetylated triglycerol stearate, fully acetylated hexaglycerol stearate, triglycerol stearate, triglycerol behenate, 50%-acetylated diglycerol oleate, 75%-acetylated diglycerol oleate, 100%-acetylated diglycerol oleate, triglycerol laurate, hexaglycerol heptastearate.

The polyglycerol fatty acid esters have a degree of esterification of at least 70%. The degree of esterification needs to be above 50% in order for the polyglycerol fatty acid ester to be able to function properly as an internal additive. When the internal additives are highly esterified the remaining hydroxyl groups are sterically hindered and do not significantly react with the polymer such as polyester itself under processing conditions.

In a further use, the degree of esterification is at least 80%. In a further use, the composition comprises fully esterified polyglycerol fatty acid esters.

In this invention the internal additives are highly esterified. The remaining hydroxyl groups are therefore sterically hindered and do not significantly reduce the molecular weight of the polyester during processing. However, as lubricants they can reduce the extrusion torque, and/or the extrusion pressure. In this way they enable energy savings during processing and better processability by reducing surface friction, e.g. processing or handling of final products.

In the polymer composition the concentration of the internal additive is 0.1-5 wt%. Hereby, is to be understood that the weight of the internal additive comprises 5% or less of the total weight of the polymer composition. If the concentration of the internal additive is too high this could alter the mechanical properties of the polymer matrix.

In a further use, the concentration of said internal additive is 0.3-3 wt%. In a still further use, the concentration of said internal additive is 0.5-3 wt%.

In a further use, the fatty acid chain length of said polyglycerol fatty acid esters is C2-C24. In a still further use, the fatty acid chain length is C12-C24. In a still further use, said fatty acid chain length is C14-C22. In a still further embodiment, the fatty acid chain length is C14-C24. In a still further embodiment, the fatty acid chain length is C16-C24. In a still further embodiment, the fatty acid chain length is C12-C18.

These chain lengths are particularly advantageous in combination with food or foodstuff since they are all edible fatty acids.

It is implicitly to be understood that both saturated and unsaturated fatty acids can be used as part of the polyglycerol fatty acid ester.

Furthermore, a mixture of saturated and unsaturated fatty acids can be used in the formation of the polyglycerol fatty acid ester.

Furthermore, a mixture of different chain lengths of fatty acids can be used for the internal additive. Hereby is to be understood that the internal additive added to a polymer composition can comprise fatty acids with different chain lengths.

The fatty acids can be both saturated and unsaturated fatty acids such as but not limited to propionic acid, butyric acid, valeric acid, caproic acid, enathic acid, caprylic acid, pelargonic acid, capric acid, undecylic acid, luric acid, tridecylic acid myristic acid, pentadecylic acid, palmitic acid, margaric acid, staric acid, nonadecylic acid, arachidic acid, heneicosylic acid, behenic acid, tricosylic acid, lignoceric acid, α-linolenic acid, stearidonic acid, eicosapentaenoic acid, docosahexaenoic acid, linoleic acid, γ-linolenic acid, dihomo-γ-linolenic acid, arachidonic acid, docosatetraenoic acid, palmitoleic acid, vaccenic acid, paullinic acid, oleic acid, elaidic acid, gondoic acid, erucic acid, nervonic acid, mead acid, ricinoleic acid, dihydroxystearic acid.

In a further use, the hydroxyl value is below 750. In a further use, the hydroxyl value is below 500. In a further use, the hydroxyl value is below 400. In a further use, the hydroxyl value is below 350. In a further use, the hydroxyl value is below 200. In a further use, the hydroxyl value is below 100.

In addition, polyesters need internal additives with low reactivity, e.g. a low number of hydroxyl groups in order to avoid transesterification reactions or hydrolysis during processing.

A low hydroxyl value relates to a low number of accessible hydroxyl groups. Thus, a relatively low value is beneficial in preventing the internal additive from binding to the polymer such as polyester during processing.

The hydroxyl value is related to the number of hydroxyl-groups in the polyglycerol fatty acid esters and can be measured by the JECFA method, based on AOCS Method Cd 13-60.

In a further use, the number of glycerol units is 2-3. In a still further use, the number of glycerol units is 4-5.

In a further use, the number of glycerol units in said polyglycerol is at least two. Hereby, it is to be understood that the number of glycerol units condensed to form the polyglycerol is at least two. Thus, two glycerol units can be condensed to form the polyglycerol, three glycerol units can be condensed to form the polyglycerol, four glycerol units can be condensed to form the polyglycerol, five glycerol units can be condensed to form the polyglycerol.

In one use, the polyglycerol is a diglycerol. In a further use, the polyglycerol is a triglycerol. In a still further use, the polyglycerol is a tetraglycerol. In a still further use, the polyglycerol is a pentaglycerol.

In one use, the polyglycerol is a mixture of two or more different polyglycerols. Hence, the internal additive may comprise for example a mixture of diglycerols and triglycerols; diglycerols and tetraglycerols; diglycerols, triglycerols and tetraglycerols; diglycerols and pentaglycerols and so forth.

Furthermore, it is to be understood that polyglycerol is to be interpreted as a polyglycerol having x glycerol units but also comprising smaller amounts of e.g. (x-1), (x-2), (x+1) and (x+2) glycerol units. X is to be understood as the number of glycerol units condensed.

Polyglycerols may be linear, branched or cyclic in structure. Generally, all three types of polyglycerol structure may be present in the composition of the present invention. In one use, the polyglycerol is linear. In one use, the polyglycerol is branched. In one use, the polyglycerol is cyclic.

The processes for making polyglycerols are well known to the person skilled in the art and can be found, for example in "Emulsifiers in Food Technology", Blackwell Publishing, edited by RJ Whithurst, page 110 to 130.

In a further use, the internal additive has high thermal stability with less than 25% weight loss at 300°C as determined by thermogravimetric analysis (TGA).

## Claims

1. A use of a polyglycerol fatty acid ester having a chain length of C2-C24, a degree of esterification of at least 70% and a number of glycerol repeating units of 2-5 as an internal additive in a polyester polymer composition to reduce torque during processing of the polyester polymer composition, wherein the polyester polymer composition comprises the polyglycerol fatty acid ester in a concentration of 0.1-5 wt%.

2. The use according to claim 1, **characterized in that**, said fatty acid chain length is C12 - C24.

3. The use according to claim 1, **characterized in that**, said fatty acid chain length is C12-C18.

4. The use according to claim 1, **characterized in that**, said polyglycerol fatty acid ester is a triglycerol ester.

5. The use according to any of the preceding claims, **characterized in that**, the degree of esterification is at least 80%.

6. The use according to any of the preceding claims, **characterized in that**, said polyglycerol fatty acid ester has high thermal stability with less than 25% weight loss at 300°C as determined by thermogravimetric analysis (TGA).

7. The use according to claim 1, **characterized in that**, the concentration of said internal additive is 0.5-3 wt%.

8. The use according to claim 1, **characterized in that**, said polymer is poly(ethylene terephthalate) (PET).

9. The use according to claim 1, **characterized in that**, said polymer is poly(trimethylene terephthalate).

## Patentansprüche

1. Verwendung eines Polyglycerinfettsäureesters, der eine Kettenlänge von C2-C24, einen Veresterungsgrad von mindestens 70 % und eine Anzahl von Glycerinwiederholungseinheiten von 2-5 aufweist, als internes Zusatzmittel in einer Polyesterpolymerzusammensetzung, zum Reduzieren des Drehmoments während des Verarbeitens der Polyesterpolymerzusammensetzung, wobei die Polyesterpolymerzusammensetzung den Polyglycerinfettsäureester in einer Konzentration von 0,1-5 Gew.-% umfasst.

2. Verwendung nach Anspruch 1, **dadurch gekennzeichnet, dass** die Fettsäurekettenlänge C12-C24 beträgt.

3. Verwendung nach Anspruch 1, **dadurch gekennzeichnet, dass** die Fettsäurekettenlänge C12-C18 beträgt.

4. Verwendung nach Anspruch 1, **dadurch gekennzeichnet, dass** der Polyglycerinfettsäureester ein Triglycerinester ist.

5. Verwendung nach einem der vorhergehenden Ansprüche, **dadurch gekennzeichnet, dass** der Vereterungsgrad mindestens 80 % beträgt.

6. Verwendung nach einem der vorhergehenden Ansprüche, **dadurch gekennzeichnet, dass** der Polyglycerinfettsäureester eine hohe Wärmebeständigkeit mit weniger als 25 % Gewichtsverlust bei 300 °C, wie durch thermogravimetrische Analyse (TGA) bestimmt, aufweist.

7. Verwendung nach Anspruch 1, **dadurch gekennzeichnet, dass** die Konzentration des internen Zusatzmittels 0,5-3 Gew.-% beträgt.

8. Verwendung nach Anspruch 1, **dadurch gekennzeichnet, dass** das Polymer Poly(ethylenterephthalat) (PET) ist.

9. Verwendung nach Anspruch 1, **dadurch gekennzeichnet, dass** das Polymer Poly(trimethylenterephthalat) ist.

## Revendications

1. Utilisation d'un ester d'acide gras de polyglycérol présentant une longueur de chaîne de C2-C24, un degré d'estérification d'au moins 70% et un nombre d'unités de répétition de glycérol de 2-5 en tant qu'additif interne dans une composition de polymère de polyester pour réduire le moment de torsion pendant la transformation de la composition de polymère de polyester, dans lequel la composition de polymère de polyester comprend l'ester d'acide gras de polyglycérol dans une concentration de 0,1-5% en poids.

2. Utilisation selon la revendication 1, **caractérisée en ce que** ladite longueur de chaîne de l'acide gras est de C12-C24.

3. Utilisation selon la revendication 1, **caractérisée en ce que** ladite longueur de chaîne de l'acide gras est de C12-C18.

4. Utilisation selon la revendication 1, **caractérisée en ce que** ledit ester d'acide gras de polyglycérol est un ester de triglycérol.

5. Utilisation selon l'une quelconque des revendications précédentes, **caractérisée en ce que** le degré d'estérification est d'au moins 80%.

6. Utilisation selon l'une quelconque des revendications précédentes, **caractérisée en ce que** ledit ester d'acide gras de polyglycérol a une stabilité thermique élevée avec une perte de poids de moins de 25% à 300°C telle que déterminée par une analyse thermogravimétrique (TGA).

7. Utilisation selon la revendication 1, **caractérisée en ce que** la concentration dudit additif interne est de 0,5-3% en poids.

8. Utilisation selon la revendication 1, **caractérisée en ce que** ledit polymère est un poly(éthylène téréphtalate) (PET).

9. Utilisation selon la revendication 1, **caractérisée en ce que** ledit polymère est un poly(triméthylène téréphtalate).
